# EUROPEAN PATENT APPLICATION

(11) **EP 1 892 166 A2**
(43) Date of publication of application: **27.02.2008**
(21) Application number: 07015840.7
(22) Date of filing: 11.08.2007
(51) Int. Cl.: B60T 17/04

(54) **Air supply system with reduced oil passing in compressor**

(30) Priority: 25.08.2006 US 509992
(71) Applicant: Haldex Brake Corporation, Kansas City, MO 64153 (US)
(72) Inventor: Bockelmann, Kathleen Michelle, Grandview, MO 64030 (US); Schaake, Mark Dwane, Bonner Springs, KS 66012 (US)
(74) Representative: Rehberg Hüppe + Partner

(57) **Abstract**

An air supply system includes a compressor having a compression chamber, an inlet port through which air flows into the compression chamber and an outlet port through which air exits the compression chamber, an unloader which causes the compressor to be in an unloaded state when a desired system air pressure is maintained, an isolation valve preventing inlet air from flowing into the inlet port of the compressor when the compressor is in the unloaded state, and a source of pressurized air supplying pressurized air to the inlet port of the compressor at least when the isolation valve prevents inlet air from flowing into the inlet port of the compressor.

## Description

### Field of the Invention

The present invention relates generally to air supply systems using reciprocating type air compressors and, more particularly, to compressor unloading systems usable in such air supply systems, such as might be found in air supply systems for truck air brakes and the like.

### Background of the Invention

It is well known in the art that in air supply systems, such as might be found in air supply systems for truck air brakes and the like, the air compressor operates in its pumping mode for only a relatively short period of time, and that it is operated in what is known as an unloaded mode for as much as approximately 70-90 percent of the time. How to unload the air compressor to save horsepower when the compressor is not pumping, without having other problems occur, has been a long standing problem in the art.

Air compressors used in medium and heavy duty vehicle air supply systems, such as those found in transport trucks, passenger buses, and the like, generally involve having an air compressor directly driven by the vehicle engine and supplied with inlet air at atmospheric pressure, or, in the case of many transport trucks today, turbocharged air from the engine turbocharger via the engine air intake manifold.

These air compressors generally are one, two or four cylinders in nature. The earliest attempts at internally unloading the air compressor in regard to two cylinder compressors was to simply hold the intake valves for both cylinders open and pump air back and forth between the cylinders, and this was relatively satisfactory when there was no concern with the fuel cost or the horsepower being lost.

With single cylinder air compressors, the earliest unloading method simply involved holding the intake valve open so that air was pumped in and out through the compressor intake opening.

In the European countries, the approach to the problem was somewhat different, and while the intake valve was left untouched, the compressor pumped all the time while the unloading function was performed external to the compressor via a separate diverted type system called an unloader valve. This method of unloading is now generally viewed as unsatisfactory because of the noise produced, and the horsepower losses incurred. Thus, design and development work focused on better ways to unload air compressors other than simply holding the intake valve open.

In many cases, when the intake valve was held open on a single cylinder air compressor and the compressor was supplied with naturally aspirated air, which was common at the time, since the compressor intake was supplied with a separate air cleaner, pumping back and forth through the air cleaner in many cases destroyed the air cleaner, or reduced its efficiency so it would not perform for the purpose for which it was intended.

This caused some truck manufacturers to switch to a system supplied with turbocharged inlet air from the engine turbocharger to avoid the air cleaner problems and assure a clean inlet air supply, but it was then found that when unloading in the conventional way, by holding the intake valve open, the faster the engine was running, the denser the air, and the more horsepower was lost due to the unloading. Thus, the search continued for a satisfactory solution to the problem.

A clutched compressor was developed, but was not felt to be the answer to the horsepower loss problem because the compressor shaft normally runs through the compressor and often drives other accessories, such as the power steering, or engine fuel pump, and it was not satisfactory to have the power steering and other items nonfunctional for the time the compressor was unloaded. Also, the clutched compressor would substantially increase the cost of the air supply system, and this was not satisfactory. Thus, not much progress was made in developing a more efficient compressor unloading system, and simply holding the intake valve open to allow unloading either to atmosphere, or the engine turbocharger, was the accepted way of unloading the air compressor for some time.

More recent attempts have been made to solve the aforementioned longstanding problems in the prior art, and provide a more efficient compressor unloading system for use with heavy duty air supply systems. One such attempt resulted in U.S. Patent No. 4,993,992 to Lauterbach et al., in which is disclosed a system that employs either mechanical or pneumatic means to effectively prevent the intake and exhaust valves, which are generally of the pressure operated spring type, from operating during the unloading cycle. In the disclosed system, a mechanical means stops the spring-type, pressure operated intake valve from operating by blocking the compressor intake, while a pressure operated means, including an isolation valve for use with air dryer equipped air systems, effectively stops the exhaust valve of the air compressor from operating, thereby creating an "air spring."

However, while the system disclosed in U.S. Patent No. 4,993,992 does provide advantages over previously known systems, it suffers from disadvantages of its own. One such disadvantage was that, while the system employs elevated pressure at the exhaust side of the compressor in order to prevent the exhaust valve from operating, the pressure at the intake side remains relatively low. Thus, a pressure differential is formed across the pistons of the compressor, with higher pressure being maintained on the exhaust side, and lower pressure being maintained on the intake side. This pressure differential, in turn, leads to increased levels of oil passing, which, as is known, leads to further complications within the system.

What is desired, therefore, is an air supply system which is efficient in operation and economical to manufacture, which reduces the horsepower used by air compressors in their unloaded mode as compared to traditional systems, which is automatically actuated in the unloading mode, which causes relatively equalized pressure to be maintained on both sides of the compressor pistons, and which results in reduced levels of oil passing around the compressor piston rings when the compressor is in its unloading mode.

### Summary of the Invention

Accordingly, it is an object of the present invention to provide an air supply system which is efficient in operation and economical to manufacture.

Another object of the present invention is to provide an air supply system having the above characteristics and which reduces the horsepower used by air compressors in their unloaded mode as compared to traditional systems.

A further object of the present invention is to provide an air supply system having the above characteristics and which is automatically actuated in the unloading mode.

Still another object of the present invention is to provide an air supply system having the above characteristics and which causes relatively equalized pressure to be maintained on both sides of the compressor pistons.

Yet a further object of the present invention is to provide an air supply system having the above characteristics and which results in reduced levels of oil passing around the compressor piston rings when the compressor is in its unloading mode.

These and other objects of the present invention are achieved, in accordance with one embodiment of the present invention, by provision of an air supply system including a compressor having a compression chamber, an inlet port through which air flows into the compression chamber and an outlet port through which air exits the compression chamber, an unloader which causes the compressor to be in an unloaded state in response to a pneumatic signal received at a signal port, and an isolation valve. The isolation valve has an inlet port, an outlet port and a signal port, the inlet port of the isolation valve being in fluid communication with a source of inlet air, and the outlet port of the isolation valve being in fluid communication with the inlet port of the compressor. The isolation valve allows air to flow from the inlet port of the isolation valve to the outlet port of the isolation valve, and thereby allows air to flow from the source of inlet air to the inlet port of the compressor, when no pneumatic signal is received at the signal port of the isolation valve, and prevents air from flowing from the inlet port of the isolation valve to the outlet port of the isolation valve, and thereby prevents air from flowing from the source of inlet air to the inlet port of the compressor, when a pneumatic signal is received at the signal port of the isolation valve. The air supply system also includes a governor having an unloading port in fluid communication with the signal port of the isolation valve and with the signal port of the unloader, the governor supplying a pneumatic signal to the signal port of the isolation valve and the signal port of the unloader when a desired system air pressure is maintained, and a source of pressurized air supplying pressurized air to the inlet port of the compressor at least when the pneumatic signal is received by the isolation valve.

In some embodiments, the pressurized air supplied by the source of pressurized air to the inlet port of the compressor has a pressure about equal to a pressure of air in the crankcase of the compressor. In some embodiments, the source of pressurized air comprises an air reservoir in fluid communication with the inlet port of the compressor. In certain of these embodiments, the air supply system further includes a pressure regulator in fluid communication between the air reservoir and the inlet port of the compressor, the pressure regulator regulating a pressure of air supplied by the reservoir such that the pressurized air supplied by the reservoir to the inlet port of the compressor has a pressure about equal to a pressure of air a in the crankcase of the compressor.

In some embodiments, the unloading port of the governor is in fluid communication with the inlet port of the compressor, such that the source of pressurized air comprises the unloading port of the governor. In certain of these embodiments, the air supply system further includes a pressure regulator in fluid communication between the unloading port of the governor and the inlet port of the compressor, the pressure regulator regulating a pressure of air supplied by the unloading port of the governor such that the pressurized air supplied by the unloading port of the governor to the inlet port of the compressor has a pressure about equal to a pressure of air in the crankcase of the compressor. In certain embodiments, the governor further comprises a reservoir port, and the air supply system further includes a reservoir having a port in fluid communication with the reservoir port of the governor.

In some embodiments, the isolation valve comprises a valve body moveable, in response to the pneumatic signal received at the signal port of the isolation valve, between an open position in which the isolation valve allows air to flow from the inlet port of the isolation valve to the outlet port of the isolation valve, and thereby allows air to flow from the source of inlet air to the inlet port of the compressor, and a closed position in which the isolation valve prevents air from flowing from the inlet port of the isolation valve to the outlet port of the isolation valve, and-thereby prevents air from flowing from the source of inlet air to the inlet port of the compressor. In certain of these embodiments, the valve body is biased toward the open position, and is moveable against the bias to the closed position when the pneumatic signal is received at the signal port of the isolation valve.

In accordance with another embodiment of the present invention, an air supply system includes a compressor having a compression chamber, an inlet port through which air flows into the compression chamber and an outlet port through which air exits the compression chamber, an unloader which causes the compressor to be in an unloaded state when a desired system air pressure is maintained, an isolation valve preventing inlet air from flowing into the inlet port of the compressor when the compressor is in the unloaded state, and a source of pressurized air supplying pressurized air to the inlet port of the compressor at least when the isolation valve prevents inlet air from flowing into the inlet port of the compressor.

In some embodiments, the pressurized air supplied by the source of pressurized air to the inlet port of the compressor has a pressure about equal to a pressure of air in the crankcase of the compressor. In some embodiments, the source of pressurized air comprises an air reservoir in fluid communication with the inlet port of the compressor. In certain of these embodiments, the air supply system further includes a pressure regulator in fluid communication between the air reservoir and the inlet port of the compressor, the pressure regulator regulating a pressure of air supplied by the reservoir such that the pressurized air supplied by the reservoir to the inlet port of the compressor has a pressure about equal to a pressure of air in the crankcase of the compressor.

In some embodiments, the air supply system further includes a governor in fluid communication with the isolation valve and with the unloader, the governor signaling the unloader to cause the compressor to be in the unloaded state when the desired system air pressure is maintained, and signaling the isolation valve to prevent inlet air from flowing into the inlet port of the compressor when the desired system air pressure is maintained. In certain of these embodiments, the governor is in fluid communication with the inlet port of the compressor, such that the source of pressurized air comprises the governor. In certain embodiments, the air supply system further includes a pressure regulator in fluid communication between the governor and the inlet port of the compressor, the pressure regulator regulating a pressure of air supplied by the governor such that the pressurized air supplied by the governor to the inlet port of the compressor has a pressure about equal to a pressure of air in the crankcase of the compressor. In certain embodiments, the air supply system further includes a reservoir in fluid communication with the governor.

In accordance with a further embodiment of the present invention, an air supply system includes a compressor having a compression chamber, an inlet port through which air flows into the compression chamber and an outlet port through which air exits the compression chamber, an unloader which causes the compressor to be in an unloaded state in response to a pneumatic signal received at a signal port, and an isolation valve. The isolation valve has an inlet port, an outlet port and a signal port, the inlet port of the isolation valve being in fluid communication with a source of inlet air, and the outlet port of the isolation valve being in fluid communication with the inlet port of the compressor. The isolation valve also includes a valve body moveable between an open position in which the isolation valve allows air to flow from the inlet port of the isolation valve to the outlet port of the isolation valve, and thereby allows air to flow from the source of inlet air to the inlet port of the compressor, and a closed position in which the isolation valve prevents air from flowing from the inlet port of the isolation valve to the outlet port of the isolation valve, and thereby prevents air from flowing from the source of inlet air to the inlet port of the compressor. The valve body is biased toward the open position, and is moveable against the bias to the closed position when a pneumatic signal is received at the signal port of the isolation valve. The air supply system further includes a governor having an unloading port in fluid communication with the signal port of the isolation valve and with the signal port of the unloader, the governor supplying a pneumatic signal to the signal port of the isolation valve and the signal port of the unloader when a desired system air pressure is maintained. Further, the air supply system includes an air reservoir in fluid communication with the inlet port of the compressor, the air reservoir supplying pressurized air to the inlet port of the compressor at least when the pneumatic signal is received by the isolation valve.

In some embodiments, the air supply system further includes a pressure regulator in fluid communication between the air reservoir and the inlet port of the compressor, the pressure regulator regulating a pressure of air supplied by the reservoir such that the pressurized air supplied by the reservoir to the inlet port of the compressor has a pressure about equal to a pressure of air in the crankcase of the compressor.

In accordance with another embodiment of the present invention, an air supply system includes a compressor having a compression chamber, an inlet port through which air flows into the compression chamber and an outlet port through which air exits the compression chamber, an unloader which causes the compressor to be in an unloaded state in response to a pneumatic signal received at a signal port, and an isolation valve. The isolation valve has an inlet port, an outlet port and a signal port, the inlet port of the isolation valve being in fluid communication with a source of inlet air, and the outlet port of the isolation valve being in fluid communication with the inlet port of the compressor. The isolation valve further includes a valve body moveable between an open position in which the isolation valve allows air to flow from the inlet port of the isolation valve to the outlet port of the isolation valve, and thereby allows air to flow from the source of inlet air to the inlet port of the compressor, and a closed position in which the isolation valve prevents air from flowing from the inlet port of the isolation valve to the outlet port of the isolation valve, and thereby prevents air from flowing from the source of inlet air to the inlet port of the compressor. The valve body is biased toward the open position, and is moveable against the bias to the closed position when a pneumatic signal is received at the signal port of the isolation valve. The air supply system also includes a governor having an unloading port in fluid communication with the signal port of the isolation valve and with the signal port of the unloader, the governor supplying a pneumatic signal to the signal port of the isolation valve and the signal port of the unloader when a desired system air pressure is maintained. The unloading port of the governor is in fluid communication with the inlet port of the compressor, such that the unloading port of the governor supplies pressurized air to the inlet port of the compressor at least when the desired system air pressure is maintained.

In some embodiments, the air supply system further includes a pressure regulator in fluid communication between the unloading port of the governor and the inlet port of the compressor, the pressure regulator regulating a pressure of air supplied by the unloading port of the governor such that the pressurized air supplied by the unloading port of the governor to the inlet port of the compressor has a pressure about equal to a pressure of air in the crankcase of the compressor. In some embodiments, the governor further comprises a reservoir port, and the air supply system further includes a reservoir having a port in fluid communication with the reservoir port of the governor.

The invention and its particular features and advantages will become more apparent from the following detailed description considered with reference to the accompanying drawings.

### Brief Description of the Drawings

**Fig. 1** is a schematic view of an air supply system in accordance with an embodiment of the present invention; and

**Fig. 2** is a schematic view of an air supply system in accordance with another embodiment of the present invention.

### Detailed Description of an Embodiment of the Invention

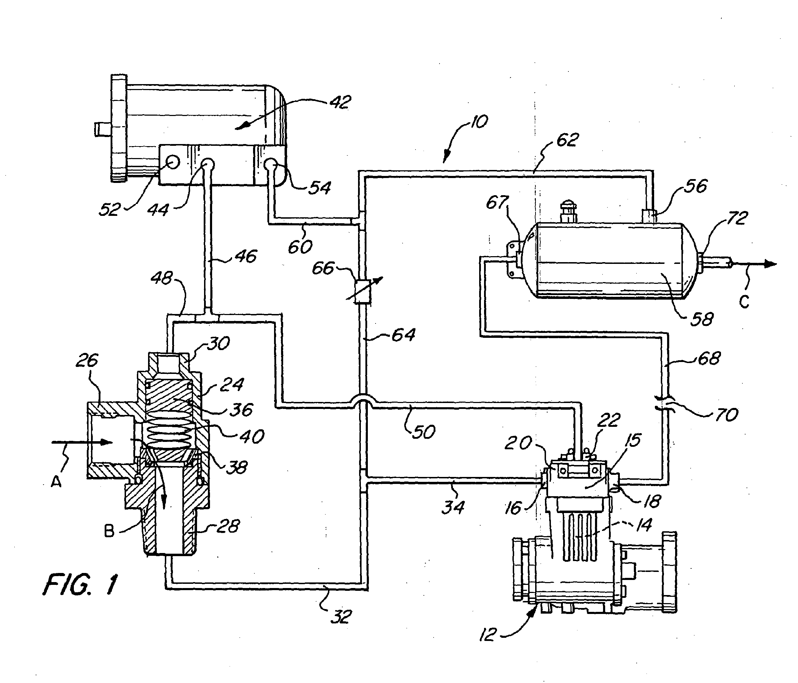

Referring first to Figure 1, an air supply system 10 in accordance with an embodiment of the present invention is shown. Air supply system 10 includes a compressor 12 having a compression chamber 14, a compressor head 15, an inlet port 16 through which air flows into compression chamber 14 and an outlet port 18 through which air exits compression chamber 14. Compressor 12 is typically a reciprocating type compressor, and may have any of numerous known or yet to be developed configurations, the particular configuration thereof being generally unimportant to operation of the invention disclosed herein. Since numerous such compressors are extremely well-known in the art, the particular structure and operation of compressor 12 is not discussed herein in detail.

An unloader 20 causes compressor 12 to be in an unloaded state in response to a pneumatic signal being received at a signal port 22 thereof. Unloader 20 may be integrally formed as part of compressor 12 (as shown in the Figures), or may comprise a separate component. Again, since numerous such unloaders are extremely well-known in the art, the particular structure and operation of unloader 20 is not discussed herein in detail.

Air supply system 10 also includes an isolation valve 24 having an inlet port 26, an outlet port 28 and a signal port 30. Inlet port 26 of isolation valve 24 is in fluid communication with a source of inlet air (indicated by arrow A). Source of inlet air may simply be the atmosphere, or may be a turbocharger supplying air under pressure. An air filter or the like (not shown), or some other component or components may be provided if desired, without affecting the operation of the present invention. Outlet port 28 of isolation valve 24 is in fluid communication with inlet port 16 of compressor 12 via conduits 32, 34.

Isolation valve 24 allows air to flow from inlet port 26 of isolation valve 24 to outlet port 28 of isolation valve 24, and thereby allows air to flow from source of inlet air A to inlet port 16 of compressor 12, when no pneumatic signal is received at signal port 30 of isolation valve 24, and prevents air from flowing from inlet port 26 of isolation valve 24 to outlet port 28 of isolation valve 24, and thereby prevents air from flowing from source of inlet air A to inlet port 16 of compressor 12, when a pneumatic signal is received at signal port 30 of isolation valve 24. Referring more specifically to the exemplary embodiments illustrated, isolation valve 24 comprises a valve body 36 moveable, in response to a pneumatic signal being received at signal port 30 of isolation valve 24, between an open position (shown in the Figures) in which isolation valve 24 allows air to flow from inlet port 26 of isolation valve 24 to outlet port 28 of isolation valve 24 (indicated by arrow B), and thereby allows air to flow from source of inlet air A to inlet port 16 of compressor 12 via isolation valve 24 and conduits 32, 34, and a closed position (when valve body is moved downward with respect to the orientation shown in the Figures such that valve body 36 seals against valve seat 38) in which isolation valve 24 prevents air from flowing from inlet port 26 of isolation valve 24 to outlet port 28 of isolation valve 24, and thereby prevents air from flowing from source of inlet air (A) to inlet port 16 of compressor 12. Preferably, valve body 36 is biased toward the open position by a spring 40 or the like, and is moveable against the bias to the closed position when a pneumatic signal is received at signal port 30 of isolation valve 24.

Air supply system 10 also includes a governor 42 of the conventional type having an unloading port 44 in fluid communication with signal port 30 of isolation valve 24 (via conduits 46, 48) and with signal port 22 of unloader 20 (via conduits 46, 50). Governor 42 also includes an exhaust port 52 in fluid communication with a low pressure environment (such as atmosphere) and a reservoir port 54 in fluid communication with a signal outlet port 56 of a reservoir 58 via conduits 60, 62.

Signal outlet port 56 of reservoir 58 is also in fluid communication with inlet port 16 of compressor 12 via conduits 62, 64, 34. A pressure regulator 66 is disposed in fluid communication between signal outlet port 56 of reservoir 58 and inlet port 16 of compressor 12, preferably along conduit 64.

Outlet port 18 of compressor 12 is in fluid communication with an inlet port 67 of reservoir 58 via one or more conduits 68. As indicated at 70, such communication need not be direct communication, and there may be one or more components, such as an air dryer or even an entire system for regulating the exhaust side of compressor 12 (such as the system disclosed in U.S. Patent No. 4,993,922), disposed between outlet port 18 of compressor 12 and inlet port 67 of reservoir 58. An outlet port 72 of reservoir 58 supplies compressed air (indicated by arrow C) to various other components of a brake system or some other system employing compressed air for operation.

Operation of air compressor system 10 will now be described. When compressor 12 is in its loaded pumping mode, isolation valve 24 is in its open position, and air is drawn from source of inlet air A through inlet port 26 of isolation valve 24, outlet port 28 of isolation valve, conduits 32, 34 and inlet port 16 of compressor 12 into compression chamber 14. Air compressed within compression chamber 14 then exists outlet port 18 of compressor 12 and enters inlet port 67 of reservoir 58 via conduit 68 and any intermediate components 70.

Compressed air is transmitted from reservoir 58 through signal outlet port 56 of reservoir 58, via conduits 62, 60, to reservoir port 54 of governor 42 and, via conduits 62, 64, 34 and pressure regulator 66, to inlet port 16 of compressor 12. At this point, no pneumatic signal is being transmitted from governor 42 to isolation valve 24 or unloader 20.

When the pressure within reservoir 58, and therefore at reservoir port 54 of governor, reaches a threshold level, a pneumatic signal (i.e., pressurized air) is transmitted from governor 42, through unloading port 44, in a manner known in the art, and to signal port 30 of isolation valve 24 (via conduits 46, 48) and at the same time to signal port 22 of unloader 20 (via conduits 46, 50). The pneumatic signal received by unloader 20 causes compressor 12 to switch to its unloaded mode of operation, while the signal received by isolation valve 24 causes isolation valve 24 to switch to its closed position, thereby cutting off communication between inlet port 16 of compressor 12 and source of inlet air A.

At the same time, pressurized air continues to be transmitted from reservoir 58 through signal outlet port 56 of reservoir 58, via conduits 62, 64, 34 and via pressure regulator 66, to inlet port 16 of compressor 12, thereby causing pressure to be maintained on the inlet side of compressor 12. Pressure regulator 66 preferably regulates a pressure the pneumatic signal such that the pressurized air supplied by reservoir 58 to inlet port 16 of compressor 12 has a pressure about equal to a pressure of air in the crankcase of compressor 12.

Pressure regulator 66 also ensures that the valve body 36 of isolation valve 24 does not become unseated before such is desired. More specifically, if the pressure within conduit 32 were equal to the pressure within conduit 48, the combined force of the pressure at outlet port 28 of isolation valve 24 plus the force exerted by spring 40 would be higher than the force of the pressure at signal port 30 of isolation valve 24, such that the valve body 36 may be moved away from its closed position. By ensuring that pressure regulator 66 reduces the pressure of the pneumatic signal sufficiently, this problem can be avoided. Of course, the problem could also be avoided by disposing a check valve or the like within conduit 32 or outlet 28 of isolation valve 24.

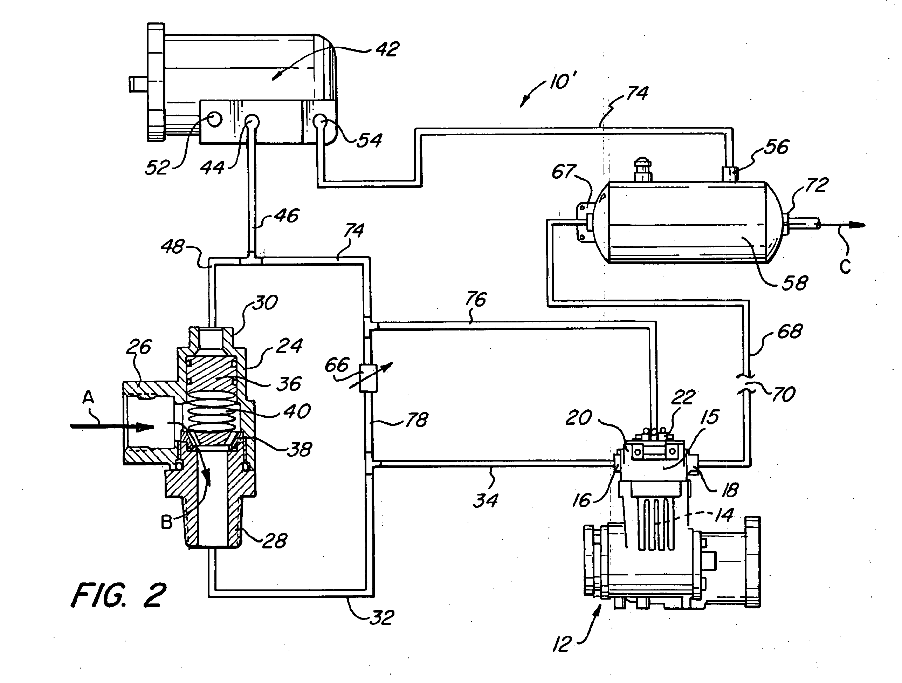

Referring now to Figure 2, another embodiment of air supply system 10' is shown. Air supply system 10' is similar in many respects to air supply system 10, and like elements are referred to with like reference characters. The main difference between air supply system 10' and air supply system 10 is that, rather than reservoir 58 directly supplying pressurized air to inlet port 16 of compressor 12, in air supply system 10', pressurized air is supplied to inlet port 16 of compressor 12 via governor 42.

More specifically, signal outlet port 56 of reservoir 58 is in direct fluid communication with only reservoir port 54 of governor 42 (via conduit 74), and not with inlet port 16 of compressor 12. Unloading port 44 of governor 42 is in fluid communication with signal port 30 of isolation valve 24 (via conduits 46, 48), with signal port 22 of unloader 20 (via conduits 46, 74, 76) and with inlet port 16 of compressor 12 (via conduits 46, 74, 78, 34 and pressure regulator 66).

Operation of air compressor system 10' will now be described. When compressor 12 is in its loaded pumping mode, isolation valve 24 is in its open position, and air is drawn from source of inlet air A through inlet port 26 of isolation valve 24, outlet port 28 of isolation valve, conduits 32, 34 and inlet port 16 of compressor 12 into compression chamber 14. Air compressed within compression chamber 14 then exists outlet port 18 of compressor 12 and enters inlet port 67 of reservoir 58 via conduit 68 and any intermediate components 70.

Compressed air is transmitted from reservoir 58 through signal outlet port 56 of reservoir 58, via conduit 74, to reservoir port 54 of governor 42. At this point, no pneumatic signal is being transmitted from governor 42 to isolation valve 24, unloader 20 or inlet port 16 of compressor 12.

When the pressure within reservoir 58, and therefore at reservoir port 54 of governor, reaches a threshold level, a pneumatic signal (i.e., pressurized air) is transmitted from governor 42, through unloading port 44, in a manner known in the art, and to signal port 30 of isolation valve 24 (via conduits 46, 48), to signal port 22 of unloader 20 (via conduits 46, 74, 76), and to inlet port 16 of compressor 12 (via conduits 46, 74, 78, 34 and pressure regulator 66). The pneumatic signal received by unloader 20 causes compressor 12 to switch to its unloaded mode of operation, while the signal received by isolation valve 24 causes isolation valve to switch to its closed position, thereby cutting off communication between inlet port 16 of compressor 12 and source of inlet air A.

At the same time, pressure is maintained on the inlet side of compressor 12 due to the pressurized air being transmitted from unloading port 44 of governor 42 and to inlet port 16 of compressor 12 (via conduits 46, 74, 78, 34 and pressure regulator 66). Pressure regulator 66 preferably regulates a pressure the pneumatic signal such that the pressurized air supplied by governor 42 to inlet port 16 of compressor 12 has a pressure about equal to a pressure of air in the crankcase of compressor 12. Pressure regulator 66 also ensures that the valve body 36 of isolation valve 24 does not become unseated before such is desired in the manner described above.

As should be appreciated from the above detailed description of system operation, air supply system 10, since pressurized air is supplied directly from reservoir 58 to compressor 12 without passing through governor 42, supplies pressurized air to the compressor whether the compressor 12 is in the loaded or unloaded mode. However, since, in air supply system 10', pressurized air is supplied to compressor 12 via unloading port 44 of governor 42, pressurized air is only supplied while compressor 12 is in its unloaded state.

The present invention, therefore, provides an air supply system which is efficient in operation and economical to manufacture, which reduces the horsepower used by air compressors in their unloaded mode as compared to traditional systems, which is automatically actuated in the unloading mode, which causes relatively equalized pressure to be maintained on both sides of the compressor pistons, and which results in reduced levels of oil passing around the compressor piston rings when the compressor is in its unloading mode.

Although the invention has been described with reference to a particular arrangement of parts, features and the like, these are not intended to exhaust all possible arrangements or features, and indeed many other modifications and variations will be ascertainable to those of skill in the art.

## Claims

1. An air supply system comprising:
a compressor having a compression chamber, an inlet port through which air flows into the compression chamber and an outlet port through which air exits the compression chamber;
an unloader which causes said compressor to be in an unloaded state in response to a pneumatic signal received at a signal port;
an isolation valve having an inlet port, an outlet port and a signal port, the inlet port of said isolation valve being in fluid communication with a source of inlet air, and the outlet port of said isolation valve being in fluid communication with the inlet port of said compressor, said isolation valve allowing air to flow from the inlet port of said isolation valve to the outlet port of said isolation valve, and thereby allowing air to flow from the source of inlet air to the inlet port of said compressor, when no pneumatic signal is received at the signal port of the isolation valve, and preventing air from flowing from the inlet port of said isolation valve to the outlet port of said isolation valve, and thereby preventing air from flowing from the source of inlet air to the inlet port of said compressor, when a pneumatic signal is received at the signal port of the isolation valve;
a governor having an unloading port in fluid communication with the signal port of said isolation valve and with the signal port of said unloader, said governor supplying a pneumatic signal to the signal port of said isolation valve and the signal port of said unloader when a desired system air pressure is maintained; and
a source of pressurized air supplying pressurized air to the inlet port of said compressor at least when the pneumatic signal is received by said isolation valve.

2. The air supply system of Claim 1 wherein the pressurized air supplied by said source of pressurized air to the inlet port of said compressor has a pressure about equal to a pressure of air in a crankcase of said compressor.

3. The air supply system of Claim 1 wherein said source of pressurized air comprises an air reservoir in fluid communication with the inlet port of said compressor.

4. The air supply system of Claim 3 further comprising a pressure regulator in fluid communication between the air reservoir and the inlet port of said compressor, said pressure regulator regulating a pressure of air supplied by the reservoir such that the pressurized air supplied by the reservoir to the inlet port of said compressor has a pressure about equal to a pressure of air in a crankcase of said compressor.

5. The air supply system of Claim 1 wherein the unloading port of said governor is in fluid communication with the inlet port of said compressor, such that said source of pressurized air comprises the unloading port of said governor.

6. The air supply system of Claim 5 further comprising a pressure regulator in fluid communication between the unloading port of said governor and the inlet port of said compressor, said pressure regulator regulating a pressure of air supplied by the unloading port of said governor such that the pressurized air supplied by the unloading port of said governor to the inlet port of said compressor has a pressure about equal to a pressure of air in a crankcase of said compressor.

7. The air supply system of Claim 5 wherein said governor further comprises a reservoir port, and wherein the air supply system further comprises a reservoir having a port in fluid communication with the reservoir port of said governor.

8. The air supply system of Claim 1 wherein said isolation valve comprises a valve body moveable, in response to the pneumatic signal received at the signal port of the isolation valve, between an open position in which said isolation valve allows air to flow from the inlet port of said isolation valve to the outlet port of said isolation valve, and thereby allows air to flow from the source of inlet air to the inlet port of said compressor, and a closed position in which said isolation valve prevents air from flowing from the inlet port of said isolation valve to the outlet port of said isolation valve, and thereby prevents air from flowing from the source of inlet air to the inlet port of said compressor.

9. The air supply system of Claim 8 wherein the valve body is biased toward the open position, and is moveable against the bias to the closed position when the pneumatic signal is received at the signal port of the isolation valve.

10. An air supply system comprising:
a compressor having a compression chamber, an inlet port through which air flows into the compression chamber and an outlet port through which air exits the compression chamber;
an unloader which causes said compressor to be in an unloaded state when a desired system air pressure is maintained;
an isolation valve preventing inlet air from flowing into the inlet port of said compressor when said compressor is in the unloaded state; and
a source of pressurized air supplying pressurized air to the inlet port of said compressor at least when said isolation valve prevents inlet air from flowing into the inlet port of said compressor.

11. The air supply system of Claim 10 wherein the pressurized air supplied by said source of pressurized air to the inlet port of said compressor has a pressure about equal to a pressure of air in a crankcase of said compressor.

12. The air supply system of Claim 10 wherein said source of pressurized air comprises an air reservoir in fluid communication with the inlet port of said compressor.

13. The air supply system of Claim 12 further comprising a pressure regulator in fluid communication between the air reservoir and the inlet port of said compressor, said pressure regulator regulating a pressure of air supplied by the reservoir such that the pressurized air supplied by the reservoir to the inlet port of said compressor has a pressure about equal to a pressure of air in a crankcase of said compressor.

14. The air supply system of Claim 10 further comprising a governor in fluid communication with said isolation valve and with said unloader, said governor signaling said unloader to cause the compressor to be in the unloaded state when the desired system air pressure is maintained, and signaling said isolation valve to prevent inlet air from flowing into the inlet port of said compressor when the desired system air pressure is maintained.

15. The air supply system of Claim 14 wherein said governor is in fluid communication with the inlet port of said compressor, such that said source of pressurized air comprises said governor.

16. The air supply system of Claim 15 further comprising a pressure regulator in fluid communication between said governor and the inlet port of said compressor, said pressure regulator regulating a pressure of air supplied by said governor such that the pressurized air supplied by said governor to the inlet port of said compressor has a pressure about equal to a pressure of air in a crankcase of said compressor.

17. The air supply system of Claim 15 further comprising a reservoir in fluid communication with said governor.

18. An air supply system comprising:
a compressor having a compression chamber, an inlet port through which air flows into the compression chamber and an outlet port through which air exits the compression chamber;
an unloader which causes said compressor to be in an unloaded state in response to a pneumatic signal received at a signal port;
an isolation valve having an inlet port, an outlet port and a signal port, the inlet port of said isolation valve being in fluid communication with a source of inlet air, and the outlet port of said isolation valve being in fluid communication with the inlet port of said compressor, said isolation valve further comprising a valve body moveable between an open position in which said isolation valve allows air to flow from the inlet port of said isolation valve to the outlet port of said isolation valve, and thereby allows air to flow from the source of inlet air to the inlet port of said compressor, and a closed position in which said isolation valve prevents air from flowing from the inlet port of said isolation valve to the outlet port of said isolation valve, and thereby prevents air from flowing from the source of inlet air to the inlet port of said compressor, wherein the valve body is biased toward the open position, and is moveable against the bias to the closed position when a pneumatic signal is received at the signal port of the isolation valve;
a governor having an unloading port in fluid communication with the signal port of said isolation valve and with the signal port of said unloader, said governor supplying a pneumatic signal to the signal port of said isolation valve and the signal port of said unloader when a desired system air pressure is maintained; and
an air reservoir in fluid communication with the inlet port of said compressor, said air reservoir supplying pressurized air to the inlet port of said compressor at least when the pneumatic signal is received by said isolation valve.

19. The air supply system of Claim 18 further comprising a pressure regulator in fluid communication between the air reservoir and the inlet port of said compressor, said pressure regulator regulating a pressure of air supplied by the reservoir such that the pressurized air supplied by the reservoir to the inlet port of said compressor has a pressure about equal to a pressure of air in a crankcase of said compressor.

20. An air supply system comprising:
a compressor having a compression chamber, an inlet port through which air flows into the compression chamber and an outlet port through which air exits the compression chamber;
an unloader which causes said compressor to be in an unloaded state in response to a pneumatic signal received at a signal port;
an isolation valve having an inlet port, an outlet port and a signal port, the inlet port of said isolation valve being in fluid communication with a source of inlet air, and the outlet port of said isolation valve being in fluid communication with the inlet port of said compressor, said isolation valve further comprising a valve body moveable between an open position in which said isolation valve allows air to flow from the inlet port of said isolation valve to the outlet port of said isolation valve, and thereby allows air to flow from the source of inlet air to the inlet port of said compressor, and a closed position in which said isolation valve prevents air from flowing from the inlet port of said isolation valve to the outlet port of said isolation valve, and thereby prevents air from flowing from the source of inlet air to the inlet port of said compressor, wherein the valve body is biased toward the open position, and is moveable against the bias to the closed position when a pneumatic signal is received at the signal port of the isolation valve;
a governor having an unloading port in fluid communication with the signal port of said isolation valve and with the signal port of said unloader, said governor supplying a pneumatic signal to the signal port of said isolation valve and the signal port of said unloader when a desired system air pressure is maintained; and
wherein the unloading port of said governor is in fluid communication with the inlet port of said compressor, such that the unloading port of said governor supplies pressurized air to the inlet port of said compressor at least when the desired system air pressure is maintained.

21. The air supply system of Claim 20 further comprising a pressure regulator in fluid communication between the unloading port of said governor and the inlet port of said compressor, said pressure regulator regulating a pressure of air supplied by the unloading port of said governor such that the pressurized air supplied by the unloading port of said governor to the inlet port of said compressor has a pressure about equal to a pressure of air in a crankcase of said compressor.

22. The air supply system of Claim 20 wherein said governor further comprises a reservoir port, and wherein the air supply system further comprises a reservoir having a port in fluid communication with the reservoir port of said governor.
